# EUROPÄISCHE PATENTSCHRIFT

(11) **EP 2 138 386 B1**
(45) Veröffentlichungstag und Bekanntmachung des Hinweises auf die Patenterteilung: **29.06.2011**
(21) Anmeldenummer: 08011733.6
(22) Anmeldetag: 27.06.2008
(51) Int. Cl.: B62D 59/04

(54) **Haltevorrichtung für eine Rangiervorrichtung**
Holding device for a manoeuvring device
Dispositif de retenue pour un dispositif de maneuvre

(43) Veröffentlichungstag der Anmeldung: 30.12.2009
(73) Patentinhaber: Truma Gerätetechnik GmbH & Co. KG, 85640 Putzbrunn (DE)
(72) Erfinder: Schaurer, Oliver, 85445 Niederding (DE); Müller, Jörg, 85658 Egmating (DE); Frank, Andreas, 83022 Rosenheim (DE)
(74) Vertreter: Müller - Hoffmann & Partner

(56) Entgegenhaltungen:
- EP-A- 1 764 274
- EP-A- 1 840 019
- DE-U1-202006 016 521

## Beschreibung

Die Erfindung betrifft eine Haltevorrichtung für eine Rangiervorrichtung für einen Anhänger.

Aus der EP 1 714 859 A1 ist ein kompakter Hilfsantrieb als Rangiervorrichtung für einen Anhänger bekannt. Der Hilfsantrieb weist eine starr mit einem Fahrgestell verbindbare Halterung, einen relativ zu der Halterung bewegbaren Träger, einen von dem Träger gehaltenen Antriebsmotor und eine von dem Antriebsmotor antreibbare Antriebsrolle auf. Durch einen Bewegungsmechanismus lässt sich der Träger zwischen einer Ruheposition, in der die Antriebsrolle von einem Rad des Anhängers getrennt ist, und einer Antriebsposition, in der die Antriebsrolle gegen das Rad des Anhängers gedrückt wird, bewegen.

Der Hilfsantrieb (Rangiervorrichtung) samt Träger ist vollständig auf ein als Querträger dienendes Vierkantrohr aufgesetzt, welches parallel zur Fahrzeugachse am Grundrahmen des Anhängers befestigt ist und damit auf jeder Seite des Anhängers für das dort jeweils vorhandene Anhängerrad einen eigenen Hilfsantrieb bzw. eine eigene Rangiervorrichtung trägt. Zusätzlich kann eine den jeweiligen Träger tragende Halterung an das Anhänger-Chassis angeschraubt werden. Die im Betrieb, wenn der Träger in der Antriebsposition steht, auftretenden Kräfte und Momente werden über das Vierkantrohr auf die beiden Rangiervorrichtungen verteilt. Dadurch kann eine ausreichende Verwindungssteifigkeit erreicht werden.

Eine ähnliche Anordnung ist aus der WO 2006/061177 A1 bekannt. Auch dort ist ein parallel zur Fahrzeugachse verlaufender, als Momentenstütze dienender Querträger vorgesehen.

Es ist bekannt, dass die Befestigung derartiger Rangiervorrichtungen an Anhängern, z.B. an Wohnwagen, aufwendig ist. Die Fahrgestelle bzw. Grundrahmen (Chassis) der Anhänger weisen keine einheitlichen, genormten Formen und keine einheitlichen Rahmenkonturen auf. Vielmehr haben sie unterschiedliche Geometrien und Größen. Diesen von Hersteller zu Hersteller und von Anhängertyp zu Anhängertyp bestehenden Unterschieden muss mit aufwendigen Klemmmechanismen und Adapterplatten Rechnung getragen werden. Die zur Dreh- und Biegemomentabstützung erforderliche Verbindungsstange (Quer- bzw. Mittelstange) zwischen den beiden Antriebsseiten erhöht das Gesamtgewicht und den Montageaufwand. Auf die Mittelstange kann jedoch nicht verzichtet werden, da übliche Chassisrahmen als Befestigungsort für derartige Rangiervorrichtungen mangels ausreichender Verwindungssteifigkeit nicht geeignet sind.

Aus der gattungsgemäßen DE 20 2006 016 521 U1 ist eine Antriebseinheit für geringe Fahrgeschwindigkeiten bekannt, die wahlweise am Fahrzeugrahmen oder an der Fahrzeugachse befestigt ist.

Der Erfindung liegt daher die Aufgabe zugrunde, eine verbesserte Haltevorrichtung für eine Rangiervorrichtung eines Anhängers anzugeben, die bei ausreichender Verwindungssteifigkeit ein geringeres Gewicht aufweist und einen niedrigeren Montageaufwand erfordert.

Die Aufgabe wird erfindungsgemäß durch eine Haltevorrichtung mit den Merkmalen von Anspruch 1 gelöst. Vorteilhafte Ausgestaltungen der Erfindung sind in den abhängigen Ansprüchen angegeben.

Eine Haltevorrichtung für eine Rangiervorrichtung für einen Anhänger weist eine Trageinrichtung auf, an der die Rangiervorrichtung befestigbar ist, wobei die Trageinrichtung an einem Grundrahmen (Chassisrahmen) des Anhängers befestigbar ist und wobei die Trageinrichtung an einer Fahrzeugachse des Anhängers abstützbar ist.

Die Trageinrichtung dient zum Tragen der an sich bekannten Rangiervorrichtung (auch als Hilfsantrieb bezeichnet). So kann die Rangiervorrichtung als eine Einheit auf die Trageinrichtung aufgesetzt bzw. daran befestigt werden. Die Trageinrichtung kann dann ihrerseits an dem Grundrahmen des Anhängers, also an dem Chassis bzw. Chassisrahmen des Anhängers befestigt werden. Zur Abstützung der Momente, die insbesondere im Betrieb der Rangiervorrichtung durch die zwischen der Rangiervorrichtung und dem von der Rangiervorrichtung angetriebenen Anhängerrad wirkenden Kräfte entstehen, ist eine Abstützung der Trageinrichtung an der Fahrzeugachse des Anhängers vorgesehen. Daher wird die bisherige Verbindungsstange (Mittelstange, Querstange) zwischen den beiden Antriebsseiten nicht mehr benötigt.

Die im Betrieb der Rangiervorrichtung entstehenden Biege- und Drehmomente können somit zu einem erheblichen Teil an der von sich aus bereits stabilen Fahrzeugachse gestützt werden. Zusätzliche weitere Stützen sind dann nicht erforderlich, wodurch Bauaufwand, Gewicht und Kosten gespart werden können.

Der Grundrahmen des Anhängers ist zwar ebenfalls in der Lage, Momente aufzunehmen. Im Betrieb der Rangiervorrichtung entstehen jedoch so hohe Belastungen, dass die von der Trageinrichtung nahezu punktuell einwirkenden Kräfte und Momente zu einer unzulässigen Verformung des Grundrahmens führen würden. Daher können diese Belastungen an der Fahrzeugachse abgestützt werden.

Die Trageinrichtung kann eine Flanschplatte aufweisen, die an dem Grundrahmen befestigbar ist. Mit Hilfe der Flanschplatte ist es dann sehr einfach möglich, die Trageinrichtung an dem Grundrahmen zu montieren.

Es kann eine Abstützeinrichtung zum Abstützen der Trageinrichtung an der Fahrzeugachse vorgesehen sein, wobei die Abstützeinrichtung sowohl an der Fahrzeugachse als auch an dem Grundrahmen befestigbar ist. Es ist somit nicht erforderlich, dass die Abstützeinrichtung direkt die Trageinrichtung abstützt. Vielmehr genügt es, wenn der die Trageinrichtung bereits haltende Grundrahmen an geeigneter Stelle durch die Abstützeinrichtung abgestützt wird.

Die Abstützeinrichtung kann an dem Grundrahmen gegenüberliegend von der Flanschplatte befestigt werden. Die Trageinrichtung leitet über die Flanschplatte Kräfte und Momente in den Grundrahmen ein, die dann zumindest teilweise oder sogar weitestgehend durch die gegenüberliegend vorgesehene Abstützeinrichtung an die stabile Fahrzeugachse weitergeleitet werden.

Die Abstützeinrichtung kann einen Gegenflansch aufweisen, der gegenüberliegend von der Flanschplatte angeordnet ist, derart, dass zwischen dem Gegenflansch und der Flanschplatte ein entsprechender Teil des Grundrahmens eingeschlossen ist. Dadurch, dass der Gegenflansch und die Flanschplatte einander gegenüberliegen, können die Kräfte von der Trageinrichtung flächig von der Flanschplatte auf den Gegenflansch und damit schließlich auf die Fahrzeugachse geführt werden. Dadurch wird eine lokale Verformung des Grundrahmens verhindert.

Der entsprechende Teil des Grundrahmens kann zwischen dem Gegenflansch und der Flanschplatte eingeklemmt sein. Somit ist es möglich, die Haltevorrichtung mittels Reibschluss an dem Grundrahmen zu halten. Eine dauerhafte Verbindung, z.B. durch Schweißen etc., ist nicht erforderlich. Dies erleichtert eine spätere Demontage der Haltevorrichtung und damit der Rangiervorrichtung, wenn z.B. die Anlage ausgetauscht oder modernisiert werden soll.

Der Gegenflansch und die Flanschplatte können durch Befestigungsmittel zusammengehalten werden, die sich durch Ausnehmungen in den entsprechenden Teil des Grundrahmens erstrecken. Als Befestigungsmittel eignen sich z.B. Schrauben, die durch den Gegenflansch und die Flanschplatte gesteckt werden. Dabei kann es zweckmäßig sein, wenn als Ausnehmungen in dem Grundrahmen Öffnungen genutzt werden, die üblicherweise im Grundrahmen von Anhängern (z.B. Wohnwagen) ohnehin bereits vorhanden sind. So werden die Grundrahmen von Anhängern häufig durch U- oder T-Profile gebaut, in deren vertikalen Wänden größere Ausnehmungen zur Gewichtsersparnis vorgesehen sind. Durch diese Ausnehmungen können die Befestigungsmittel durchgeführt werden, so dass eine Bearbeitung des Grundrahmens, insbesondere ein Erzeugen von geeigneten Bohrungen in dem Grundrahmen nicht erforderlich ist. Dadurch wird der Herstellungs- bzw. Montageaufwand weiter vermindert.

Die Abstützeinrichtung kann ein bezüglich der Fahrzeugachse schräg verlaufendes Stützelement aufweisen. Dieses Stützelement ist geeignet, die am Gegenflansch in die Abstützeinrichtung eingeleiteten Kräfte und Momente auf die Fahrzeugachse zu übertragen. Da sich die Fahrzeugachse meist senkrecht zu den Hauptträgern des Grundrahmens erstreckt, ist ein schräger Verlauf des Stützelements besonders geeignet. Als Stützelement eignet sich z.B. eine Strebe, ein Profil oder ein entsprechendes Stützblech.

Die Rangiervorrichtung kann relativ zu der Tragvorrichtung zwischen wenigstens zwei Positionen bewegt werden. Eine erste Position der Rangiervorrichtung kann eine Ruheposition sein, in der die Rangiervorrichtung vom Rad des Anhängers getrennt ist. Die zweite Position der Rangiervorrichtung kann dann eine Antriebsposition sein, in der die Rangiervorrichtung gegen das Rad des Anhängers angedrückt ist, so dass sie das Rad antreiben kann.

Dabei kann die Rangiervorrichtung einen von der Trageinrichtung gehaltenen, relativ zu der Trageinrichtung bewegbaren Träger, einen von dem Träger gehaltenen Antriebsmotor, eine von dem Antriebsmotor antreibbare Antriebsrolle und einen Bewegungsmechanismus zum Bewegen des Trägers zwischen den beiden Positionen aufweisen. In der Ruheposition ist dann die Antriebsrolle vom Rad des Anhängers getrennt, während die Antriebsrolle in der Antriebsposition gegen das Rad des Anhängers gedrückt wird.

Die Trageinrichtung selbst ist an dem Grundrahmen befestigt, während der Träger mit Hilfe des Bewegungsmechanismus zwischen den beiden Positionen hin- und herbewegt wird. Dadurch bewegen sich auch der Antriebsmotor und die Antriebsrolle zwischen den beiden Positionen.

Eine derartige Rangiervorrichtung ist im Prinzip aus der EP 1 714 859 A1 bekannt.

Diese und weitere Vorteile und Merkmale werden nachfolgend anhand eines Beispiels unter Zuhilfenahme der begleitenden Figuren näher erläutert. Es zeigen:
- **Fig. 1**: in Perspektivansicht von außen gesehen eine Haltevorrichtung mit einer Rangiervorrichtung für einen Anhänger;
- **Fig. 2**: eine Trageinrichtung der Haltevorrichtung;
- **Fig.3**: die Haltevorrichtung in Perspektivansicht von innen gesehen;
- **Fig. 4**: eine Abstützeinrichtung der Haltevorrichtung;
- **Fig. 5**: die Haltevorrichtung mit Rangiervorrichtung in einer Draufsicht.

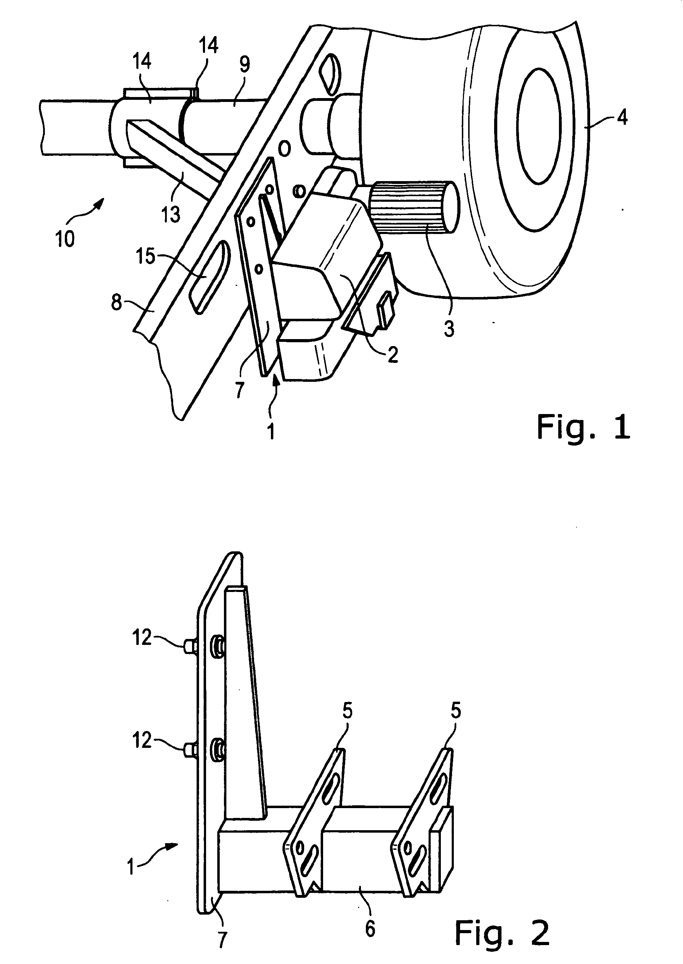

Die Fig. 1 bis 5 zeigen in verschiedenen Ansichten eine Haltevorrichtung für eine Rangiervorrichtung für einen Anhänger bzw. Komponenten davon. Gleiche Bauelemente sind mit gleichen Bezugszeichen gekennzeichnet.

Die Haltevorrichtung weist eine Trageinrichtung 1 auf, auf der eine Rangiervorrichtung 2 befestigt ist.

Die Rangiervorrichtung 2 stellt einen Hilfsantrieb für einen Anhänger dar. Ein Beispiel für eine derartige Rangiervorrichtung 2 ist in der EP 1 714 859 A1 bzw. in WO 2006/061177 A1 beschrieben. Selbstverständlich sind auch andere Rangiervorrichtungen geeignet.

Derartige Rangiervorrichtungen eignen sich dafür, Anhänger, insbesondere Wohnwagen, die aufgrund ihrer Größe und ihres Gewichts oft nur mit Mühen von Hand verschoben werden können, auch ohne Zugmaschine zu verschieben bzw. zu drehen.

Derartige Hilfsantriebe bzw. Rangiervorrichtungen weisen häufig eine von einem Elektromotor angetriebene Antriebsrolle auf, die im Bedarfsfall gegen die Lauffläche eines Reifens des Anhängers angedrückt werden kann. Durch Drehen der Antriebsrolle wird auch der Reifen des Anhängers gedreht, so dass sich der Anhänger entsprechend bewegt. Selbstverständlich sind üblicherweise zwei Rangierantriebe, nämlich einer auf jeder Seite des Anhängers bzw. jeweils ein Rangierantrieb pro Rad vorzusehen, um eine gleichmäßige Geradeausfahrt des Anhängers zu erleichtern. Bei gegenläufigem Antrieb oder bei Antrieb mit unterschiedlichen Geschwindigkeiten kann der Anhänger gedreht bzw. entlang einer Kurve verfahren werden.

Die in Fig. 1 gezeigte Rangiervorrichtung 2 befindet sich aktuell in der Antriebsposition, bei der eine Antriebsrolle 3 der Rangiervorrichtung 2 gegen den Umfang eines Rads 4 bzw. Reifens des Anhängers gedrückt wird.

Im Ruhezustand kann die Rangiervorrichtung 2 mit der Antriebsrolle 3 radial von dem Rad 4 wegbewegt werden, so dass die Antriebsrolle 3 nicht mehr in Kontakt mit dem Rad 4 steht. Dann ist der Anhänger frei bewegbar und kann z.B. von einer Zugmaschine (einem Kraftfahrzeug) in üblicher Weise gezogen werden.

Insbesondere kann die Rangiervorrichtung 2 relativ zu der Trageinrichtung 1 verschoben werden. Zu diesem Zweck weist die Rangiervorrichtung 2 einen in den Figuren nicht gezeigten Träger auf, auf dem alle weiteren Komponenten der Rangiervorrichtung 2 angeordnet ist. Der Träger ist seinerseits relativ zu zwei Halterungen 5 (Fig. 2) bewegbar.

Die in Fig. 2 gezeigte Trageinrichtung 1 weist neben den Halterungen 5 einen Querträger 6 auf, der an eine Flanschplatte 7 mündet. Die Flanschplatte 7 steht im Wesentlichen vertikal.

Die Flanschplatte 7 ist an der Außenseite eines zu einem Grundrahmen des Anhängers gehörenden Längsträgers 8 befestigt. Der Längsträger 8 bildet in bekannter Weise einen Teil eines Chassis des Anhängers und wird ebenfalls bekannterweise durch eine Fahrzeugachse 9 des Anhängers durchdrungen. Die Fahrzeugachse 9 dient zur Lagerung und Führung der gegenüberliegenden Räder 4. Zusätzlich können noch Feder- und Dämpfereinrichtungen bzw. weitere Fahrwerkselemente (Lenker etc.) vorgesehen sein, die jedoch in den Figuren nicht gezeigt sind. Ebenso ist es möglich, dass die Drehachse der Räder 4 relativ zu der Fahrzeugachse 9 verschwenkbar ist.

Auf der der Flanschplatte 7 gegenüberliegenden Seite des Längsträgers 8 ist eine Abstützeinrichtung 10 vorgesehen, die sich zwischen der Fahrwerkachse 9 und dem Längsträger 8 erstreckt.

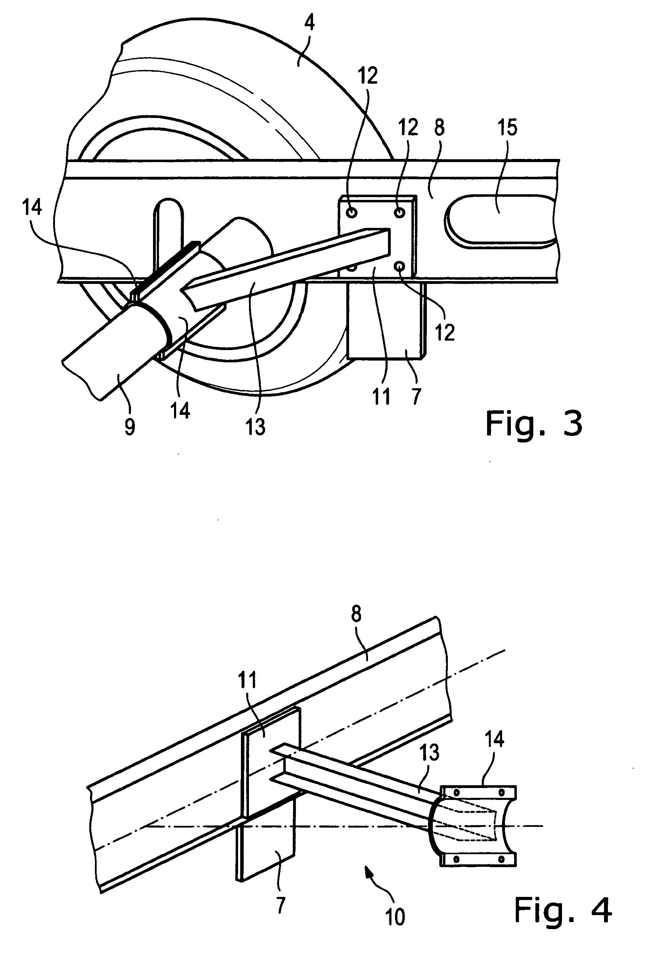

Wie insbesondere Fig. 3 zeigt, weist ein Ende der Abstützeinrichtung 10 einen Gegenflansch 11 auf, der bezüglich des Längsträgers 8 gegenüberliegend von der Flanschplatte 7 angeordnet ist. Der Gegenflansch 11 und die Flanschplatte 7 sind durch als Befestigungsmittel dienende Schrauben 12 miteinander derart verbunden, dass sie den Längsträger 8 zwischen sich einklemmen. Dadurch wird sichergestellt, dass die Trageinrichtung 1 an dem Längsträger 8 gehalten wird, ohne dass es weiterer Maßnahmen bedarf.

Von dem Gegenflansch 11 erstreckt sich schräg eine als Stützelement dienende Strebe 13 in Richtung der Fahrzeugachse 9. An dem dem Gegenflansch 11 gegenüberliegenden Ende der Strebe 13 ist die Strebe 13 mit Hilfe zweier Halbschalen 14 außen an der Fahrzeugachse festgeschraubt (Fig. 3 und 4).

Die Haltevorrichtung wird somit durch die Trageinrichtung 1 und die Abstützeinrichtung 10 gebildet. Aufgrund der Schraubverbindungen ist es einfach möglich, die Haltevorrichtung zu montieren und insbesondere nachzurüsten bzw. jederzeit auch wieder abzubauen. Eine Veränderung der eigentlichen Bauelemente des Anhängers, also insbesondere der Fahrzeugachse 9 und des Grundrahmens (Längsträger 8) ist nicht erforderlich.

Zu diesem Zweck sind die Flanschplatte 7 und der Gegenflansch 11 an einer Stelle des Längsträgers 8 angeordnet, die durch eine Ausnehmung 15 durchdrungen ist. So ist es üblich, dass die in einem Grundrahmen des Anhängers verbauten Träger häufig Ausnehmungen 15 aufweisen, um Gewicht zu sparen. Die Ausnehmungen 15 schwächen den Längsträger 8 nur unwesentlich und können daher in Kauf genommen werden. Der Gewichtsvorteil ist hingegen beträchtlich.

Die Flanschplatte 7 und der Gegenflansch 11 können derart positioniert sein, dass die Schrauben 12 eine an der betreffenden Stelle vorgesehene Ausnehmung 15 durchdringen (in den Fig. nicht gezeigt). Dann ist es nicht erforderlich, für die Schrauben 12 eigene Bohrungen in dem Längsträger 8 zu erzeugen.

Anstelle der Flanschplatte 7 kann auch eine andere Konstruktion, z.B. ein Rahmenaufbau geeignet sein. Ebenso ist es möglich, die Strebe 13 durch ein geeignetes Profil (vgl. Fig. 4) oder ein Blech zu ersetzen.

Mit Hilfe der Trageinrichtung 1 ist es möglich, die Rangiervorrichtung 2 an dem Längsträger 8 zu befestigen und sicher zu halten. Die im Betrieb der Rangiervorrichtung 2 auftretenden Momente, z.B. Biegemomente, die durch die auf die Antriebsrolle 3 im Betrieb wirkenden Kräfte erzeugt werden, werden durch die Abstützeinrichtung 10 aufgenommen und gegen die Fahrzeugachse 9 abgestützt. Dazu werden die an der Antriebsrolle 3 eingeleiteten Kräfte über die Rangiervorrichtung 2 und die Trageinrichtung 1 auf die Flanschplatte 7 geleitet und von dort auf den Gegenflansch 11 übertragen. Die Kräfte werden dann vorwiegend als Druckkräfte über die Strebe 13 auf die Halbschalen 14 und damit auf die Fahrzeugachse 9 geleitet. Die Fahrzeugachse 9 ist funktionsbedingt derart stabil ausgelegt, dass sie ohne weiteres die im Betrieb der Rangiervorrichtung 2 auftretenden Kräfte und Momente aufnehmen kann. Auf diese Weise kann eine Verwindung des Grundrahmens und insbesondere des Längsträgers 8 vermieden werden.

In den Figuren ist nur eine Seite des Anhängers gezeigt. Selbstverständlich kann die gegenüberliegende Seite in ähnlicher Weise, jedoch spiegelsymmetrisch gestaltet sein, so dass die dort vorgesehene Rangiervorrichtung 2 analog über eine Haltevorrichtung an einem dort vorgesehenen Längsträger gehalten und an der Fahrzeugachse 9 abgestützt wird.

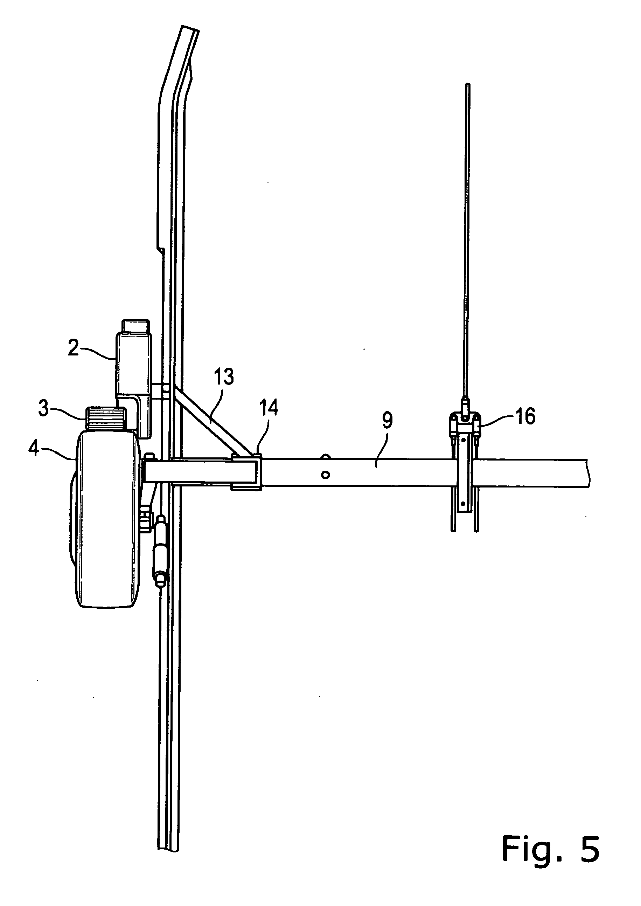

Fig. 5 zeigt die Anordnung in der Draufsicht. Zusätzlich ist eine an sich bekannte Bremseinrichtung 16 dargestellt.

Die beschriebene Haltevorrichtung kann bei Anhängern unterschiedlicher Größen und Bauformen eingesetzt werden. Ohne weiteres können verschieden gestaltete Trageinrichtungen 1 bzw. Abstützeinrichtungen 10 vorgesehen werden, um unterschiedlichen Dimensionen Rechnung zu tragen.

## Patentansprüche

1. Haltevorrichtung für eine Rangiervorrichtung (2) für einen Anhänger, mit
- einer Trageinrichtung (1), an der die Rangiervorrichtung (2) befestigbar ist; wobei
- die Trageinrichtung (1) an einem Grundrahmen (8) des Anhängers befestigbar ist;
- die Trageinrichtung (1) an einer Fahrzeugachse (9) des Anhängers abstützbar ist;
- eine Abstützeinrichtung (10) zum Abstützen der Trageinrichtung (1) an der Fahrzeugachse (9) vorgesehen ist; **dadurch gekennzeichnet, daß**
- die Abstützeinrichtung (10) an der Fahrzeugachse (9) und an dem Grundrahmen (8) befestigbar ist; und
- die Abstützeinrichtung (10) ein bezüglich der Fahrzeugachse (9) schräg verlaufendes Stützelement (13) aufweist.

2. Haltevorrichtung nach Anspruch 1, **dadurch gekennzeichnet, dass** die Trageinrichtung (1) eine Flanschplatte (7) aufweist, die an dem Grundrahmen (8) befestigbar ist.

3. Haltevorrichtung nach Anspruch 1 oder 2, **dadurch gekennzeichnet, dass** die Abstützeinrichtung (10) an dem Grundrahmen (8) gegenüberliegend von der Flanschplatte (7) befestigbar ist.

4. Haltevorrichtung nach einem der Ansprüche 1 bis 3, **dadurch gekennzeichnet, dass** die Abstützeinrichtung (10) einen Gegenflansch (11) aufweist, der gegenüberliegend von der Flanschplatte (7) angeordnet ist, derart, dass zwischen dem Gegenflansch (11) und der Flanschplatte (7) ein entsprechender Teil des Grundrahmens (8) eingeschlossen ist.

5. Haltevorrichtung nach einem der Ansprüche 1 bis 4, **dadurch gekennzeichnet, dass** der entsprechende Teil des Grundrahmens (8) zwischen dem Gegenflansch (11) und der Flanschplatte (7) eingeklemmt ist.

6. Haltevorrichtung nach einem der Ansprüche 1 bis 5, **dadurch gekennzeichnet, dass** der Gegenflansch (11) und die Flanschplatte (7) durch Befestigungsmittel (12) zusammengehalten werden, die sich durch Ausnehmungen (15) in dem entsprechenden Teil des Grundrahmens (8) erstrecken.

7. Haltevorrichtung nach einem der Ansprüche 1 bis 6, **dadurch gekennzeichnet, dass** die Rangiervorrichtung (2) relativ zu der Trageinrichtung (1) zwischen wenigstens zwei Positionen bewegbar ist.

8. Haltevorrichtung nach einem der Ansprüche 1 bis 7, **dadurch gekennzeichnet, dass** die Rangiervorrichtung (2) aufweist:
- einen von der Trageinrichtung gehaltenen, relativ zu der Trageinrichtung bewegbaren Träger;
- einen von dem Träger gehaltenen Antriebsmotor;
- eine von dem Antriebsmotor antreibbare Antriebsrolle (3); und
- einen Bewegungsmechanismus zum Bewegen des Trägers zwischen den beiden Positionen.

9. Haltevorrichtung nach Anspruch 7 oder 8, **dadurch gekennzeichnet, dass**
- eine erste Position der Rangiervorrichtung (2) eine Ruheposition ist, in der die Antriebsrolle (3) von einem Rad (4) des Anhängers getrennt ist; und dass
- eine zweite Position der Rangiervorrichtung (2) eine Antriebsposition ist, in der die Antriebsrolle (3) gegen das Rad (4) des Anhängers gedrückt wird.

## Claims

1. Holding device for a parking device (2) for a trailer comprising a carrier device (1), to which the parking device is attached, whereby:
- the carrier device (1) can be attached to a basic frame (8) of the trailer;
- the carrier device (1) can be supported against a vehicle axle (9) of the trailer, and
- a supporting device (10) is provided to support the carrier device (1) against the vehicle axle (9), **characterised in that**:
- the supporting device (10) can be secured to the vehicle axle (9), and
- the supporting device (10) comprises a supporting element (13) that is arranged obliquely in relation to the vehicle axle (9).

2. Holding device in accordance with Claim 1 above, **characterised in that** the carrier device comprises a flanged plate (7), which can be secured to the basic frame (8).

3. Holding device in accordance with Claim 1 or 2 above, **characterised in that** the supporting device (10) can be secured to the basic frame (8) opposite the flanged plate (7).

4. Holding device in accordance with any of the Claims 1 to 3 above, **characterised in that** the supporting device (10) has a counter-flange (11), which is arranged opposite the flanged plate (7) in such a way that a corresponding part of the basic frame (8) is enclosed between the counter-flange (11) and the flanged plate (7).

5. Holding device in accordance with any of the Claims 1 to 4 above, **characterised in that** the corresponding part of the basic frame (8) is tightly held between the counter-flange (11) and the flanged plate (7).

6. Holding device in accordance with any of the Claims 1 to 5 above, **characterised in that** the counter-flange (11) and the flanged plate (7) are held together by a fastening means (12), which passes through the apertures (15) in the corresponding part of the basic frame (8).

7. Holding device in accordance with any of the above Claims 1 to 6, **characterised in that** the parking device (2) can be moved in relation to the carrier device (1) between at least two positions.

8. Holding device in accordance with any of the above Claims 1 to 7, **characterised in that** the parking device (2) comprises:
- a carrier mounted on the carrier device that can be moved in relation to the carrier device;
- a drive motor mounted on the carrier;
- a drive roller (3) that can be driven by the drive motor, and
- an activation mechanism to move the carrier between the two positions.

9. Holding device in accordance with Claim 7 or 8, **characterised in that**:
- a first position of the parking device (2) is a position of rest, in which the drive roller (3) is separated from one wheel (4) of the trailer, and that
- a second position of the parking device (2) is a drive position, in which the drive roller (3) is pressed against the wheel (4) of the trailer.

## Revendications

1. Dispositif de retenue pour un dispositif de manoeuvre (2) pour une remorque, avec
- un dispositif porteur (1) auquel le dispositif de
manoeuvre (2) est apte à être fixé ;
étant précisé
- que le dispositif porteur (1) est apte à être fixé à un châssis de base (8) de la remorque,
- que le dispositif porteur (1) est apte à s'appuyer contre un essieu (9) de la remorque,
- qu'il est prévu un dispositif d'appui (10) pour l'appui du dispositif porteur (1) contre l'essieu (9),
**caractérisé en ce que**
- le dispositif d'appui (10) est apte à être fixé à l'essieu (9) et au châssis de base (8) ; et
- le dispositif d'appui (10) comporte un élément d'appui (13) qui s'étend en biais par rapport à l'essieu (9).

2. Dispositif de retenue selon la revendication 1, **caractérisé en ce que** le dispositif porteur (1) comporte une plaque de bridage (7) qui est apte à être fixée au châssis de base (8).

3. Dispositif de retenue selon la revendication 1 ou 2, **caractérisé en ce que** le dispositif d'appui (10) est apte à être fixé au châssis de base (8) à l'opposé de la plaque de bridage (7).

4. Dispositif de retenue selon l'une des revendications 1 à 3, **caractérisé en ce que** le dispositif d'appui (10) comporte une contre-plaque de bridage (11) qui est disposée à l'opposé de la plaque de bridage (7), de telle sorte qu'une partie correspondante du châssis de base (8) est entourée par la contre-plaque de bridage (11) et la plaque de bridage (7).

5. Dispositif de retenue selon l'une des revendications 1 à 4, **caractérisé en ce que** la partie correspondante du châssis de base (8) est serrée entre la contre-plaque de bridage (11) et la plaque de bridage (7).

6. Dispositif de retenue selon l'une des revendications 1 à 5, **caractérisé en ce que** la contre-plaque de bridage (11) et la plaque de bridage (7) sont réunies par des moyens de fixation (12) qui traversent des creux (15) prévus dans la partie correspondante du châssis de base (8).

7. Dispositif de retenue selon l'une des revendications 1 à 6, **caractérisé en ce que** le dispositif de manoeuvre (2) est mobile par rapport au dispositif porteur (1) entre au moins deux positions.

8. Dispositif de retenue selon l'une des revendications 1 à 7, **caractérisé en ce que** le dispositif de manoeuvre (2) comporte :
- un support retenu par le dispositif porteur et mobile par rapport à celui-ci;
- un moteur d'entraînement retenu par le support ;
- un cylindre d'entraînement (3) apte à être entraîné par le moteur d'entraînement ; et
- un mécanisme de déplacement pour déplacer le support entre les deux positions.

9. Dispositif de retenue selon la revendication 7 ou 8, **caractérisé**
- **en ce qu'**une première position du dispositif de manoeuvre (2) est une position de repos dans laquelle le cylindre d'entraînement (3) est séparé d'une roue (4) de la remorque ; et
- **en ce qu'**une seconde position du dispositif de manoeuvre (2) est une position d'entraînement dans laquelle le cylindre d'entraînement (3) est pressé contre la roue (4) de la remorque.
